# EUROPEAN PATENT APPLICATION

(11) **EP 2 276 221 A1**
(43) Date of publication of application: **19.01.2011**
(21) Application number: 10183044.6
(22) Date of filing: 23.12.2008
(51) Int. Cl.: H04L 29/06, H04M 3/51, H04L 9/32, G06Q 10/00, G06Q 30/00

(54) **Method and system for establishing and managing trust metrics for service providers in a federated service provider network**

(30) Priority: 31.12.2007 US 967550
(62) Divisional of application: 08869694.3
(71) Applicant: Genesys Telecommunications Laboratories, Inc., Dale City, CA 94014 (US)
(72) Inventor: Makagon, Petr, SAN FRANCISCO, CA 94103 (US); Ristock, Herbert, Willi Artur, WALNUT CREEK, CA 94598 (US); Ryabchun, Andriy, SAN FRANCISCO, CA 94121 (US)
(74) Representative: Hervouet, Sylvie

(57) **Abstract**

A system for enabling consumers to select service providers from a federated network of providers based on trust rating relative to one or more trust metrics comprising:
a trust authority (115) for rating service providers and issuing trust certificates to those providers;
a trust validation service (112,113,114) for validating trust certificates used in communication to convey trust; and
an interface (600) accessible to consumers for presenting a list of trusted service providers rated by the trust authority;
characterized in that the service provider information provided in the listing includes trust rating, pricing for services, and a trust certificate summary visible to the consumer to help the consumer decide which service provider to contact.

## Description

### BACKGROUND OF THE INVENTION

### 1. Field of the Invention

The present invention is in the field of federated service networks and pertains particularly to a system and methods for providing trust certification metrics for service entities and users and managing data according to established trust metrics in communication between parties interacting in a federated network.

### 2. Discussion of the State of the Art

A federated service network is a network including multiple service entities including systems that cooperate in providing services to a base of consumers, typically customers of one or more of the member companies. Federated networks typically involve major product and service companies and may include entities providing banking and investment services, retail services, insurance services, and other types of major consumer-oriented business services. The computer network set up between federated entities allows communication across multiple interfaces and between systems in a decentralized manner making security and authentication critical components of a federated network. Most secure federated networks require state-of-art security and encryption methods so that user data and business information remains private and accessible only to authorized parties of transactions and so on.

Security products and technologies in place and under development for federated systems and services include security assertion markup language (SAML), which involves an XML message exchange using simple object access protocol (SOAP) as a transport layer. The messages exchanged are called trust assertion messages. However, the concept of trust is limited to an ability to authenticate and does not consider changing or evolving circumstances. Extensible access markup control language (XACML) is another markup for enabling secure channel access. Public key infrastructure (PKI), Kerberos, Liberty Alliance Identity framework (ID-FF) and Identity Web service framework (ID-WSF) are other security frameworks and identification services available for securing data during communication and authenticating entities operating on the network including users.

Enterprises need to know that a consumer interacting with the enterprise is actually the consumer he says he is, and consumers need to know that an enterprise they are interacting with is a legitimate enterprise. Likewise, business to business data exchanges of business and consumer data have to be secure. The security and data encryption schemes described above provide authentication and data security. However, they do not provide trust, which is something that has nothing to do at all with authentication. All of the available security and identity regimens including encryption such as RSA in a federated network are rigid implementations that depend on validation from an authority that is assumed to be trusted by all on the network. Therefore, the current regimens are limited to certifying authentication of the entities interacting on the network in terms of services and systems. Users are validated to be authorized consumers to service entities as opposed to automated machines posing as users for example.

One problem with the rigid security regimens described above is that they are designed essentially for Web-based services and cannot be easily integrated to other forms of interaction such as computer-telephony integration (CTI) messages. An example might be that of a federated call service center serving a large base of consumers from geographically disparate service access points. Such a federated system may comprise federated Web-based services integrated with live federated contact telephony services.

Another problem with rigid authentication and identification services used in a federated environment is that these regimens are static and do not address real trust metrics such as quality of service, integrity in business, skills capabilities of service workers, or regional aspects of service entry points in a system. Maintaining service level objective (SLO) consistency among multiple service points in the network is important in distributed service environments, but customer care and satisfaction also remain critical concerns of the network host or hosts.

From a consumer point of view, the question "Do I know who you are"? is very different the question "Can I trust you to service me satisfactorily"?. The amount of trust in a relationship can vary from relationship to relationship and can change within a relationship over time, for example, trust can increase or it may wane in the relationship from the perspective of one or the other party to the relationship. In business relationships the dynamics are very much the same. Rigid identification routines and data encryption systems do not imply that an enterprise or a user can be trusted by everyone in the same amount or by anyone at all for that matter.

Therefore what is needed in the art are methods and a system for establishing trust certification among federated network users and service entities and for managing interaction and data disclosure over the network according to trust certification relative to those interactions.

### SUMMARY OF THE INVENTION

The problem stated above is that being able to trust an authenticated network user is desirable in a federated network environment, but many of the conventional means for authenticating users do not address particular issues of trust that might be based on trust metrics, such as skill levels, honesty, timely service, and the like. The inventors therefore considered functional elements of a federated service network, looking for elements that might support an application of trust over standard authentication measures that could potentially be harnessed to provide more protection for consumers and businesses and improve business to consumer relationships.

Every relationship is defined according to some level of trust and business relationships are no exception to the rule. Most business relationships move forward under the assumption of trust only to disintegrate or become strained when some implied trust is violated by one of the parties. It is critical to an enterprise that consumers are able to trust the enterprise and strive to improve services and quality in order to gain and hold that trust.

The present inventors realized in an inventive session that if, at the point of communication initiation in a business relationship, a reliable trust relationship could be established and certified between the communicating parties, significant improvement in consumer loyalty and satisfaction might result. The inventor therefore constructed a unique trust certification and management system for certifying basic trust levels of authenticated users on a federated network and enabling trust level validation and data management according to trust level management for individual communication sessions taking place over the network between parties.

Accordingly, a system for issuing, validating and managing trust between two or more entities authenticated to operate in a federated network is provided. The system includes one or more servers for issuing trust certificates based on one or more trust metrics, and one or more servers for validating issued trust certificates. The system is **characterized in that** entities operating through a communications interface may be issued trust certificates pursuant to evaluation relative to certain trust metrics, the certificates accompanying communications between entities the certificates subject to validation at communication end points of interaction.

According to another aspect of the invention, in a federated network, a method is provided for establishing and managing trust credentials for an entity authenticated to operate on the network. The method includes steps (a) configuring a trust level certificate for the entity pursuant to some evaluation of the entity relative to one or more trust metrics, (b) monitoring and re-evaluating the entity in term of performance and developments relative to the trust metrics after a period of time of service, and (c) based on the results of step (b), re-issuing or updating a trust certificate or maintaining the current trust certificate for the entity.

In another aspect of the present invention, a system is provided for enabling consumers to select service providers from a federated network of providers based on trust rating relative to one or more trust metrics. The system includes a trust authority for rating service providers and issuing trust certificates to those providers, a trust validation service for validating trust certificates used in communication to convey trust, and an interface accessible to consumers for presenting a list of trusted service providers rated by the trust authority. The system is **characterized in that** the service provider information provided in the listing includes trust rating, pricing for services, and a trust certificate summary visible to the consumer to help the consumer decide which service provider to contact.

According to another aspect of the invention, a method is provided for securing a communication session according to trust between two entities authenticated to operate in a federated network. The method includes steps (a) issuing by a third party, a trust certificate to each the entities when they authenticate to use the network, (b) exchanging the trust certificates between the two entities at the onset of communication between the entities, (c) validating by a third party, each trust certificate the validation performed when each of the entities receive the other's trust certificate, and (d) upon successful validation of each of the trust certificates, allowing the communication channel to remain open for communication.

In yet another aspect of the invention, a method is provided for dynamically selecting a data management policy from a pool of data management policies and implementing the policy to manage data output in a communication session. The method includes steps (a) providing the pool of data management policies and associating each of the policies to a different default trust value, (b) quantifying an amount of trust expressed by value that can be afforded to each party to the communication session based on one or more trust metrics and certifying each party according to evaluation results relative to the one or more trust metrics, (c) selecting a party to the communication session and calculating a trust value for that parties communication output based on one or an average of more than one trust value of another party or parties to the communication session, (d) comparing the derived trust value to the default trust values associated to the data management policies, (e) and selecting a trust level according to a closest match result of step (d) and implementing the associated data management policy to manage data output of that party of the communication session for the duration of the session.

### BRIEF DESCRIPTION OF THE DRAWING FIGURES

Fig. 1 is an architectural overview of a federated contact center network where trust certification and trust management is supported according to an embodiment of the present invention.
Fig. 2 is an example of a trust certificate created for an enterprise.
Fig. 3 is an example of a trust certificate created for an enterprise agent.
Fig. 4 is an example of an interface for pre-configuring trust levels for management of data for one or more communications channels.
Fig. 5 is a process flow chart illustrating steps for managing business-to-consumer (B2C) communication and data exchange according to trust.
Fig. 6 is an example of a federated network browser interface 600 illustrating service pricing presented to a consumer based on different trust levels attributed to skills.

### DETAILED DESCRIPTION

The inventors provide a system for issuing trust certificates and for managing data in communication between entities operating in a federated network environment according to trust level established between the entities. The system and methods of the present invention are detailed in the following examples.

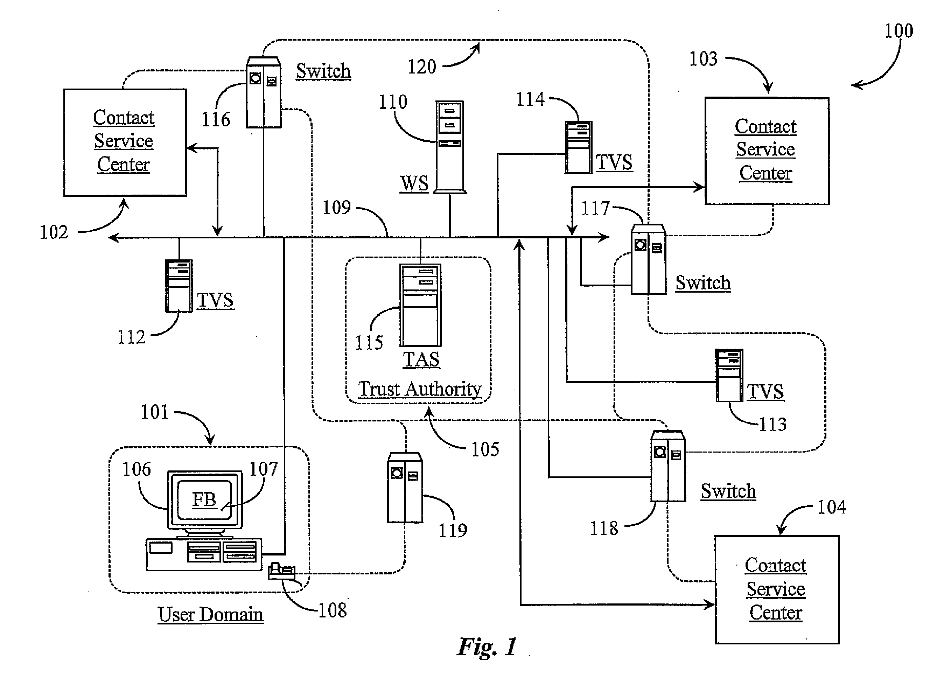

Fig. 1 is an architectural overview of a federated contact center service network 100 where trust certification and trust level management is supported according to an embodiment of the present invention. Network 100 is adapted as a federated contact service center network that includes in this example a contact service center 102, a contact service center 103, and a contact service center 104. Contact service centers 102, 193, and 104 are state-or-art multimedia-capable centers federated with one another in a classic federation embodiment sharing data, configurations and service tasks with one another.

In one embodiment, centers 102-104 are hosted by a large enterprise doing business worldwide and the federated centers are geographically remote from one another such as located in different regions or countries. In one embodiment, centers 102-104 are representative of more than one enterprise cooperating to provide a service to a large base of consumers wherein each center handles business related to a portion or link in a customer service chain. In another embodiment, centers 102-104 are hosted by a large enterprise and the federated centers are organizationally distinct from each other without regard to their physical location.

Contact centers 102-104 may be federated over more than one network because of their multiple communications capabilities and network connectivity states. For example, each center 102-104 has connection to a digital wide-area-network (WAN) 109, which may be the Internet network in a preferred example. Other networks may also connect centers 102-104 to provide certain federated services such as an automated transaction machine (ATM) network and other types of business automated networks that link disparate systems to each other for integration in a federated fashion.

Contact centers 102-104 are also connected to one another through a telephone network represented herein by a broken-line network given the element number 120. One with skill in the art of network connectivity will appreciate the physical ambiguity between different networks. The inventor illustrates a telephony network and a digital network separately for illustrative purpose only. In this example, a federated contact center example is used to illustrate the invention but the example should not be construed as a limitation as the system of the invention may also be practiced on a pure data network for Web-based services.

In this example, each contact center has connection to a local telephone switch for processing call traffic to and from ach contact center. Illustrated in this example are a switch 116 connected to contact center 102, a switch 117 connected to contact center 103, and a switch 118 connected to contact center 104. In a preferred embodiment each telephone switch is computer telephony integrated (CTI) via CTI hardware and/or software and each switch has CTI connectivity to WAN 109. Switches 116-118 are illustrated outside of contact centers 102-104 in terms of physical domain however the switches in this example may also be local central office switches located within the physical domain of each center without departing from the spirit and scope of the present invention.

Each contact center 102-104 is also has connection to WAN 109, typically through a high-speed network cabling and operates a local area network (LAN) supporting contact center agents and associated equipment used for communication and servicing customers. Each contact center may support telephone call processing and data-network-telephony (DNT) such as voice over Internet Protocol (VoIP). Email and other messaging services are also supported as s the rule in a state-of-art contact center. Federated services include telephony services and Web-based services.

WAN 109 is the Internet network in this example for illustrative purposes and because of its high public access characteristics. A user domain 101 is illustrated in this example and is representative of any consumer having access to any of the contact service centers and Web services using typical communications devices such as a computer 106 and a telephone 108. Computer 106 has a connectivity to WAN 109 such as through a dial-up Internet service, broadband service, cable/modem connection/ or digital subscriber line (DSL) service through a network provider (not illustrated). Telephone 108 is connected to telephone network 120 by a telephone line in this example. Other devices such as a cell phone, a personal digital assistant (PDA), or an IP phone also might be used in practice of the present invention.

Computer 106 has access to an instance of federated browser 107, which may be adapted to enable a single authentication to be submitted by a user operating at computer 106 to be accepted to access any federated Web-site or contact center site operating on the network and authorized as a federation member entity. Federated browser 107 may include business listings and descriptions on the federated network as well as pricing information for products and services available through the network.

WAN 109 may include one or more Web servers 110, which are adapted to host federated Web-sites that may be integrated with respective contact centers 102-104. In this example, each contact center may process both telephone calls and digital events and may share consumer data with one another during the course of servicing the consumer.

In this example, it may be assumed that authentication regimens such as an authentication server is provided on WAN 109 and that business to business and business to consumer communication is secure using RSA security or other regimen some of which were described above in the background section. The trust certification system of the present invention includes a trust protocol layer that may be installed above the authentication layer on the federated network and comes into play during normal communications over the network. The network protocol may be extended into the telephone network using CTI components and contact enter markup such as CC XML, for example. Thus, an indication of a trust level for a communications session can be propagated at the beginning of a session.

Referring now back to Fig. 1, a trust authority 105 is provided within the domain of the federated network. Trust authority 105 may be a trusted mediating authority like an authentication service that is adapted to provide trust certification for entities that are authenticated for operation in the network. Trust authority 105 may be a small administrative third-party service that manages trust propagation over the network. Although typically the trust authority will be a third party relative to all of the members of a federation, in some embodiments the trust authority may be part of one of the participating enterprises. For example, a large enterprise providing customer service through the use of in-house and third-party contact centers could act as the trust authority for all of the third party participants in the federated network of contact centers.

Trust authority 105 maintains a trust authority server (TAS) 115 connected to WAN 109. TAS 115 is adapted to serve updated trust certificates to users prior to or during the beginning of a communication session or service chain of events. Trust authority 105 may also maintain a plurality of distributed trust validation servers (TVSs) illustrated herein as TVS 112, TVS 113, and TVS 114. Users may validate issued trust certificates they receive with any local TVS as part of a security measure to issue against false certificates. Trust certification can only be performed for authenticated users (enterprises and consumers) that may operate on the federated network.

In one embodiment, a trust authority validation routine may also be installed at various routing points, gateways, and switches in certain portions of the overall network so that data propagated trough the gateways, switches, and routing points might be better managed according to some trust level network policy. In this way, trust certification and validation can b practiced from points in both telephone network 120 and on WAN 109.

From an enterprise perspective, the enterprise need only be concerned that a consumer is in fact a consumer not someone or some machine that means harm to the enterprise or wishes to defraud or otherwise take advantage of the enterprise in some way. Requiring a user to obtain trust certification on top of authentication provides an added layer of security for the enterprise. An enterprise may establish different trust levels for users based on some pre-configured trust metrics related to the enterprise business. The enterprise knows the consumer is in fact a consumer via the authentication service. Can the enterprise trust the consumer to pay his or her bills? This may be considered a condition for trust level imposed by the enterprise based on the consumers' credit rating or the trust metric "risk". The enterprise may have establish one trust level when the consumer's credit rating is greater than or equal to some threshold and a second trust level when the credit rating is less than the threshold but greater than a minimum threshold value below which services are not available to the consumer.

From the consumer perspective, the consumer has to be concerned about quality of service, timely delivery of service, customer warranties and guarantees, business integrity and similar issues. Further, the customer wants to be able to trust a representative of the enterprise that he or she has to deal with. A customer may trust one individual over another even though both individuals work for the same enterprise in the same service department. Therefore a customer may have two or more trust levels that may be pre-configured based on one or a combination of trust metrics like skill level (agent), timely service (agent, enterprise), on-time delivery (enterprise), cordiality (agent), professional demeanor (agent), and other general metrics that may affect the customer experience positively or negatively.

Trust levels may be defined by default by the trust authority 105 for both enterprises and consumers and the authority may create specific data management and handling policies and associate the policies created with those trust levels. Therefore a top level of trust established for a data or a voice session implies that data handling and information management may be less restricted. A lower level of trust established for a data or a voice session implies that data handling and data management will be more restricted.

In one embodiment, trust authority 105 evaluates and grades enterprises, enterprise workers, and users according to trust metrics related to the type of business conducted. Default trust metrics may be provided and considered in evaluation of entities authenticated to operate on the network and trust certificates may be created and issued certifying those entities according to the most recent evaluation.

In practice of the present invention, a user operating at station 106 may use federated browser 107 to connect to WS 110 and perform a single login to authenticate to use the network. The user may then navigate to any other federated site and may is considered authenticated on any participating site. The user never has to re-enter any credentials when entering federated Web sites. In a preferred embodiment, the authentication state of the user is also extended into the telephone network if the user, for example, clicks to call a service center from a federated Web site.

When the user authenticates, he or she may be issued a current trust certificate from TAS 115, which may be forwarded with any messages or other communications initiated by the user. Enterprise workers may also be issued updated trust certificates when they log in to perform work on the network. In this case, the certificates may be valid only for a specified period of time and may require validation of authenticity of the certificate when used in communication.

User 101 may wish to initiate contact with an enterprise service center 102, for example. If the user contacts the center through a Web interface, the trust certificate of the user may be sent to the center ahead of a telephone call or attached to the call as call data. When the call is registered at the center 102, a trust certificate representing the enterprise hosting the center or the center may be sent to user 101 over WAN 109 to station 106 in the form of an electronic certificate. Email, XML (SOAP), SIP, or some other messaging protocol may be used to send the certificate. In one embodiment a statement of certification may be recited to the consumer by an IVR system before a session moves forward. Each party may validate received certificates using a TVS server before moving forward with the business at hand.

Trust levels may be "attributed to the current session" from both the consumer perspective and from the service perspective by the TVS that validated the certificates or by TAS 115. Trust levels implementation enacts a specific data management policy for managing data output of any one communication party to a session. In one embodiment data management policy enacted by a trust level attribute may affect service points and end systems instructing those systems to handle and manage data sharing and disclosure, and perhaps encryption according to the policy specified by the trust level. Information known by the system may affect a trust level and preferences of a user may also affect trust level in an embodiment where a user may configure trust level preferences.

Trust levels enact data policy one way in a bi-directional data session because the levels are established from both perspectives whereby different levels of trust may be involved. An enterprise may trust a consumer at level 1 while the consumer may trust the enterprise at level 2. The enterprise may provide full data access and disclosure while the consumer may provide somewhat restricted data access and disclosure depending on the nature of the business.

In one embodiment, the system only issues and validates trust certificates, the level of trust expected listed on the certificate. In this case there may not be established trust levels applied to sessions for enacting any associated data management policies or recommendations. The consumer and the enterprise simply rely on the validated certificate that defines the current trust metrics and rating of the certified entity. Adding trust levels that may be dynamically established in communications sessions further enables data policy management recommendations to be put in place before information is exchanged over the network using Web-services or telephone services. The entire system stack integrated to standard authentication protocol may include:
- Authentication Certificate or authentication message (both directions)
- Trust Certificate or trust certification message (both directions)
- Trust certificate validation process (both directions)
- Trust level session configuration (both directions)

The system of the present invention may provide the trust services outlined above (in addition to standard authentication) for each authenticated user of the network for every communication initiated to another party authenticated on the network. The handshake protocol for exchanging trust messages or certificates and validating those certificates may reside over the top of the authentication and data encryption layers of the network. Using the trust services of the present invention enables consumers to make decisions based on trust in addition to authenticity when doing business over the network.

It is noted herein that the exact implementation of a data management policy resulting from a trust level dynamically attributed to a data session may take several different forms depending on the type of communication being conducted and the hardware and software involved in enabling the communication. The trust system may involve a browser plug-in or application that has the policies and that can issue user prompts or spawn an assistant to help the consumer determine what data should be disclosed and what should not according to the policy. In some cases the policy uses blocking or erasure software to stop any identification data or other sensitive data from being output during the session. In some cases, the policy may also control what types or context of attachments or other data may be forwarded to another party or transferred from one machine to another machine.

For digital messaging and other text applications data may be parsed and screened before output. For voice applications including telephone where the output is directly from the user, a recommendation or series of prompts might inform the user before speaking of the trust level implementation on output and make certain recommendations about the type of data that should not be given through the voice channel.

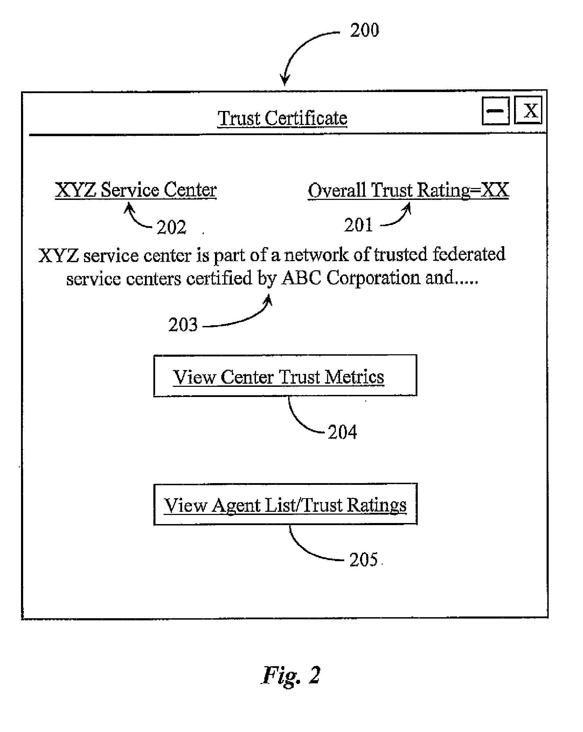

Fig. 2 is an example of a trust certificate 200 created for an enterprise. Trust certificate 200 may be presented as an electronic form or window that is interactive and that may be displayed for consumer review. The certificate has a text section 202 identifying the enterprise (XYZ Service Center) and a text section 201 that indicates an overall trust rating for the enterprise (XX). The rating if applicable might be a variable in configuration of a trust level for the consumer-to-business leg of a data session.

Certificate 203 includes a general trust summary statement basically informing the consumer that the enterprise he is attempting to reach is part of the network of trusted service centers. The summary may also identify the entity that has certified the center as one that can be reasonably trusted on the network. Some general standards might apply for an enterprise to receive a certain trust rating. For example, a simple rating system of 1-10 might be applied or some other rating like "the top 10 %" of all trusted centers operating on the network.

Certificate 200 may include an action button 204 enabling the consumer to drill deeper and look at the trust metrics for the enterprise. The trust metrics are basically what the enterprise is evaluated in to earn a trust rating. Enterprise history, actions, complaints filed, law suits pending, credit ratings, community service record, green record, or other general trust metrics related to an enterprise as a whole might apply.

Certificate 200 may include an action button 205 enabling the customer to view a current listing or directory of agents and their individual trust ratings. A consumer that initiates a communication session and receives a certificate in reply may automatically have the certificate validated during the session by the third-party TVS analogous to TVS 113 of Fig. 1, for example. In a case where trust certificate validation fails, the current session may be automatically abandoned or terminated by the third-party if enabled such as might be if a TVS is also a proxy server. A small plug-in might be provided to the federated browser to enable session termination in the event of trust invalidation signifying possible fraud being committed on the consumer.

If a trust certificate like certificate 200 is received validated at the consumer end the session may continue and may also be configured with a dynamic trust level from the point of view of the consumer. If a trust level is applied to the session, data disclosure, privacy and management policy might be enforced over the connection at least in the direction of C2B over the network.

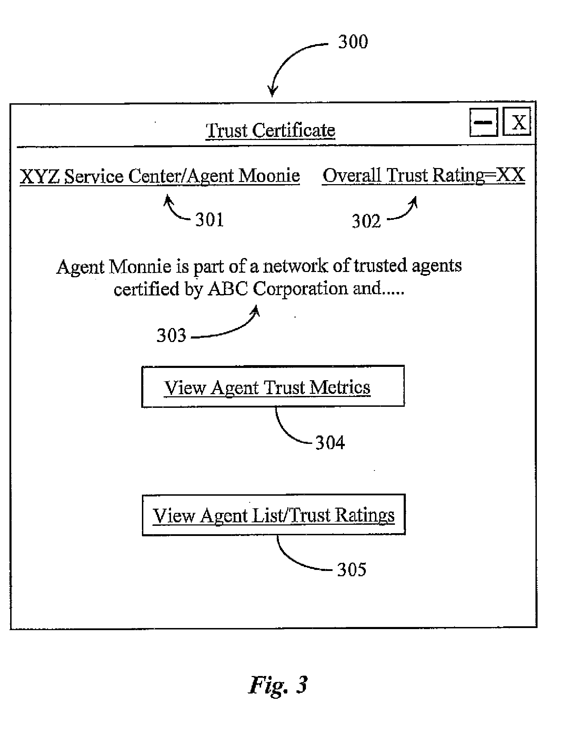

Fig. 3 is an example of a trust certificate 300 created for an enterprise agent. Trust certificate 300 may be received by a consumer when a final destination for the initiated session is known. The consumer may receive certificate 300 at the point of determination of the final destination in routing if the session is a voice session. The consumer may receive the certificate like a read receipt if the session is an email. In the case of asynchronous messaging systems there may be a protocol for obtaining a certificate and validating that certificate before creating and sending a message to the intended recipient. The consumer may be instructed not to include any important data in or attached to an email or other message until a certificate is returned and validated from the recipients account.

Certificate 300 identifies in a text section 301 the company and the agent (XYZ Service Center/Agent Moonie). Certificate 300 also identifies the agent's overall trust rating in a text section 302. Like the enterprise certificate, certificate 300 also contains a trust summary indicating that agent Moonie is part of a network of trusted agents certified by ABC Corporation. The summary may continue with other qualifications and certifications if the agent has any.

Certificate 300 may contain an action button 304 enabling the consumer to drill down and view the metrics used to evaluate the agent. The consumer can review the evaluation scores in detail in one embodiment. Certificate 300 may also include an action button 305 enabling the consumer to jump from the current certificate to view the agent list and agent trust ratings for the host enterprise.

In one embodiment the enterprise and agents working for an enterprise may obtain and validate similar trust certificates created for consumers who are authenticated to use the federated network. Consumers may be evaluated differently that enterprises or agents. In the case of consumer certificates, consumers are evaluated from the perspective of the enterprise that is mostly concerned with identity but may also have issues with consumers who cannot pay their bills, are very difficult to work with, are notorious window shoppers, etc.

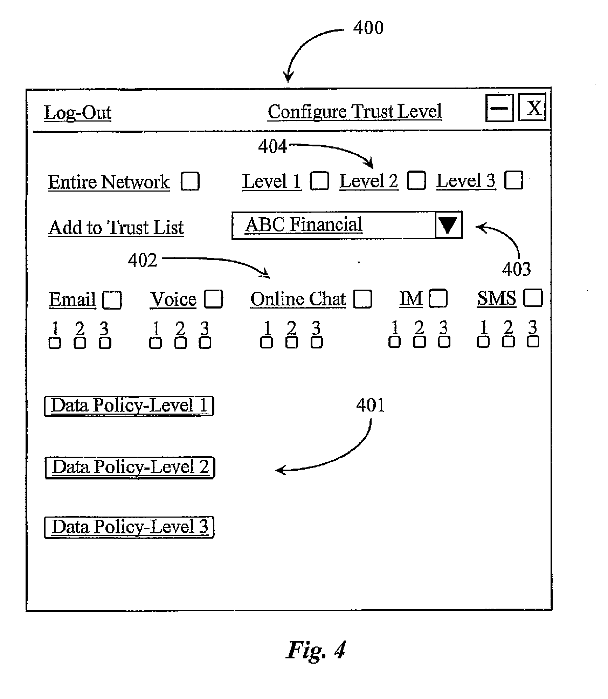

Fig. 4 is an example of an interface 400 for pre-configuring trust levels for management of data for one or more communications channels. In one embodiment, trust levels may be applied to specific communications channels. Interface 400 can be accessed by an authenticated consumer and may be provided to consumers through a Web server managed by the trust authority analogous to trust authority 105 described further above.

Trust levels 404 include three separate levels of trust, level 1 (most trust), level 2 (moderate trust), and level 3 (minimum trust). In one embodiment, trust levels are applied to enact specific data management policies that come into play during data provision and exchange over the federated network. In this example, data policy action buttons 401 are available for selection to view complete data management policies for each trust level. In this example, trust levels are provided by the trust authority by default for the federated network. Level-1 enacts policy for lever-1, level 2 enacts policy for level 2 and level 3 enacts policy for level 3.

The policies may specify what contact information, financial information, or other identification information should be provided to an enterprise operating on the federated network. The policies may include protocols for treating attachments that may be sent with messages or in conjunction with telephone sessions. The policies may include protocols specifying what should be said and what should be left unsaid in a telephone exchange.

The lowest trust level might allow only the bare minimum of information exchange to enable the stated business. The moderate trust level will be less restrictive and the highest trust level least restrictive. In one embodiment, a consumer may configure available channels used to communicate with an enterprise with a trust level relative to the enterprise in questions. The consumer may configure email, voice, online chat, IM, and SMS with trust levels. In one embodiment, all available channels are automatically configured for trust level dynamically when a consumer validates a trust certificate. In this case, the system might configure certain channels with a higher trust levels that other channels including the channel being used at the time to communicate with the enterprise or an agent of the enterprise.

For example, the system might suggest that the consumer switch to voice session instead of using online chat to enjoy a higher level of trust over that channel. The trust level assignments are temporary and may vary from session to session depending on the channel used to communicate and the enterprise involved in the communication.

If communication includes any automated data transfers such as with data forwarding from one application to another or from one system to another, a trust level may enforce rules relevant to such data forwards. If an online secure wallet has more than one account for making online purchases and Pay Pal or another online payment mechanism is tied to one of the accounts, then a lower trust level might enforce use of the Pay Pal account over say a credit card. A higher trust level may allow the use of the credit card but may restrict the provision of a social security number or some other identification data.

In one embodiment, a data management policy based on a trust level can be implemented to manage data output or transfer of a party to a communication session involving more than two parties such as a conferencing session by dynamically selecting a data management policy from a pool of data management policies and implementing the policy to manage data output of that party in the session.

As described above, the data management policies may be tied to default trust levels or "values". Moreover, each of the parties to the communication has a trust certificate with a trust rating that may be expressed as a trust value. The system selects a party to the communication and calculates a trust value for that parties communication output based on one or an average of more than one trust value of another party or parties to the communication session. If there are several parties the trust value might be a derived average of all of the certificate ratings.

The system may compare a derived trust value to the default trust values or levels associated to the data management policies, and can then select a trust level according to a closest match result. The correct policy can then be implemented for hat parties data output during the remainder of the communication session. In some cases the policy merely prompts the user and reminds the user what data can be disclosed and what should not be disclosed in the session. In a more complex model, the policy can have some automation and can be integrated with a communications application to automatically monitor what data is going out and preventing some data from being output or sent by the user.

In one embodiment, trust metrics include certain skill levels and a consumer may decide to utilize an enterprise based on a slightly lower rating in exchange for a break in pricing for services. In this case, consumers may have access to a federated Web page or other listing defining competing businesses that are trusted members of the network.

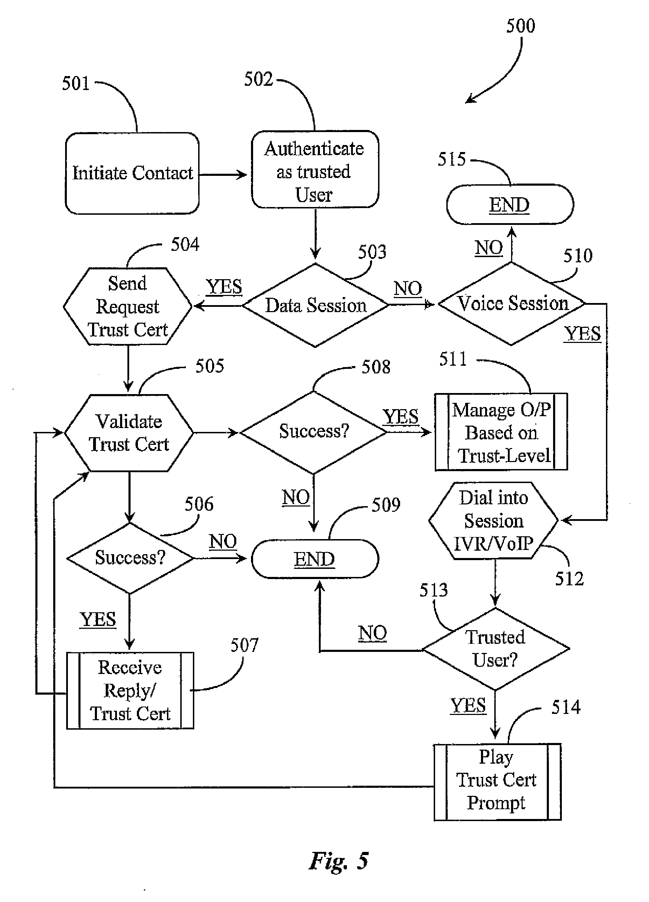

Fig. 5 is a process flow chart illustrating steps 500 for managing consumer-to-business (C2B) communication and data exchange according to trust. At step 501, a consumer initiates contact with a site where the user can authenticate to use the network. At step 502, the consumer may be asked to authenticate first as a trusted user before enabling any communication or contact over the network. The authentication enables unrestricted access to all or most federated sites. There may be some sensitive sites that are off limits to consumers such as authentication management and trust management databases open only to trusted individuals.

Once the consumer has authenticated to use the network, the consumer may decide what type of session will be used to initiate contact with a federated business entity. At step 503, the consumer decides if a data session will be initiated. If at step 503, the consumer decides to contact the enterprise and establish a data session; at step 504 the consumer may send a request to the enterprise to open a data session. If the consumer received a trust certificate at the time of authentication, and the enterprise requires a trust certificate from the user, then the certificate may be sent along as data attached to the request to open a data session. The data session could involve Email, IM, SMS, Chat, file share, co-browse, or some Web service form interaction. Session Initiation Protocol (SIP) can be used in one embodiment to orchestrate requests for communication and it is flexible enough to allow third party trust services to take part in the interaction before communication begins. Other protocols may also be used such as an extension of XML-based markup and simple object access protocol (SOAP) wrapper used in some authentication message exchanges.

At step 505, the enterprise or enterprise agent as the case may be, may validate the consumer's trust certificate. At step 506, the trust management system determines if the consumer certificate is valid or not. At step 506, if the determination is that the consumer certificate is not valid, then the communication is terminated at step 509 by the "remote server" or by the interface hosting the channel at the end of the enterprise. If at step 506, it is determined that the consumer certificate is valid, then at step 507, the consumer may receive a reply from the destination party containing a trust certificate attached or embedded into the message data.

The process moves back to step 505 where the *consumer* now validates the enterprise or agent trust certificate sent in or attached to the reply of step 507. Depending on the nature of the data session, the reply and the way the certificate is presented to the consumer may vary. In one cases, the certificate is in the form of an interactive executable that can be opened and manipulated to obtain more information. In one case, the certificate is a full text file containing all of the information in printed text. A certificate may take the form of a window, a visual alert or some other graphic display.

At step 508, the trust management system determines if the certificate is valid or not. At step 508, if it is determined that the certificate is not valid, the session may be terminated on the *consumer* end back at step 509. If the certificate is determined to be valid at step 508, then at step 511, the data session may move forward and information exchanged during the session may be restricted according to a trust level established for the session by the trust management system. A trust validation server (TVS) such as one analogous to TVS 113 of Fig. 1 can be used to validate certificates for both a user and an enterprise or in this case a contact service center agent. A TVS may also be used to establish trust levels for the data session. A trust level may be applied for all data going from the consumer to the enterprise and a trust level might be established at the enterprise end back at step 505 when the enterprise validated the consumer trust certificate before replying to the consumer.

Referring now back to process step 503, the user may determine that a data session will not be initiated. The process moves to a decision step 510 where the consumer determines if a voice session will be initiated rather than a data session. If at step 505, the consumer decides a voice session will not be initiated, the process may end or terminate at step 515. If at step 505, the consumer decides to initiate a voice session, then at step 512, the consumer may dial into the voice session such as by placing a telephone call, for example. The voice session initiation may result in connection to an IVR or other VoIP-capable voice attendant. A consumer trust certificate may be forwarded to the enterprise terminal as call data attached to the call waiting at the enterprise terminal.

Step 512 is analogous to the enterprise receiving a request at step 505. At step 513, the enterprise IVR system or other attendant can get the consumer trust certificate validated using a TVS through a CTI-enabled gateway accessible via CTI link from the IVR system. A VoIP attendant may run on a server connected to the network and can request validation directly from a TVS.

At step 513, if the trust management system validates the consumer certificate, then the voice interface may optionally play a certificate-of-trust message as a prompt for the user and the validating TVS may send the enterprise certificate or an electronic copy as electronic data attached to an email or the telephone system may generate an automated SMS message containing the attached certificate or certificate data to the consumer's cell phone, for example. The consumer may then validate the trust certificate back at step 505 while on hold with the enterprise or while waiting for an agent. Trust certificates may, by default, contain an action button for validating the certificate, the button including a link to the validation service (TVS). The process moves back to step 508 where the system determines if the certificate is valid or not. If at step 508, the system determines that the certificate is not valid, then at step 509 the session may be terminated at the consumer end. If the system determines that the certificate is valid then the process moves again to step 511 where information may be restricted based on a trust level if applicable. For telephone sessions and IP voice sessions, the restriction may apply to any data about the consumer that may be transferred or forwarded to the enterprise on behalf of the consumer.

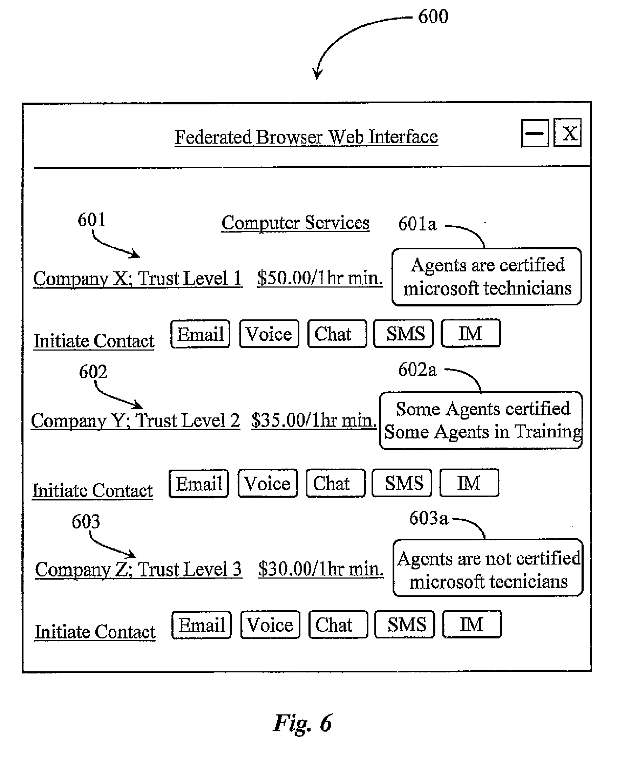

Fig. 6 is an example of a federated network browser interface 600 illustrating service pricing presented to a consumer based on different trust levels attributed to skills. Browser interface 600 may be provided to consumers for browsing networked resources available to consumers through the network. Browser 600 may also serve as an interface for authentication and trust management certificate issuance, validation and trust level configuration.

In this example, browser 600 is used to navigate to a services page offering a consumer a range of computer services provided through the network by trusted enterprises. In this case, there are three companies the consumer may contact to receive computer services such as technical support for example. A first offering 601 is available through company X, which has a trust level of 1. Services through company X are offered at a rate of $50.00 per hour with a one hour minimum charge.

A trust certificate message 601a indicates that all of the agents at company X are Microsoft-certified technicians. The fact that all of the agents are certified gives company X a default favorable trust rating or level. The trust metric is skills or qualifications. An option is presented for initiating contact with company X using one of several available channels. The hourly charge may only apply to live services available through chat, voice, or IM channels. Email and SMS channels may cost less because the interaction is not live or time monitored.

In one embodiment a consumer may initiate contact after authenticating to use the network using one of the offered channels resulting in an exchange of trust certificates and validation of those certificates on both sides of the connection. The full certification may contain much more information than cert message or summary 601a.

The next offer in the list is offer 602 available through company Y with a trust rating or level of 2. The charge for the same services through company Y is only $35.00 per hour with a one hour minimum charge. However, the trust summary 602a indicates that some agents of company Y are certified Microsoft agents while others are agents in training to receive certification. Using skills/qualifications as a trust metric, the trust rating is by default lower than that of company X. The lower pricing of offer 602a reflects its lower trust rating.

The next offer in the list is offer 603 available through a company Z. Company Z has a trust rating of 3 or the lowest rating available while still being considered a trusted source. The pricing for the same services through company Z is only $5.00 per hour less than company Y. Company Z has no agents that are certified Microsoft technicians and no agents in training for certification according to trust certificate 603a.

A consumer might initiate contact with company Y hoping to get a certified agent on tap for a lower rate. The consumer runs the risk of having to deal with an agent in training instead of a certified agent. Depending on the nature of the computer problem, the customer may take the risk for lower fees. If the consumer's computer problem was complex and critical then the consumer may not take a risk and opt for the services of company X.

As described further above, a federated network may include many competing businesses offering essentially the same services to consumers in a competitive environment. Those enterprises may compete for higher trust ratings enabling them to get more money for their services. Other more subtle factors might affect a company's trust rating. Enterprises and enterprise agents may have trust certificates issued and validated and may be required to be re-evaluated periodically to see if a rating should be changed based on more recent information. A consumer may also have trust certificates issued and validated and may also be required to renew trust certification periodically.

It will be apparent to one with skill in the art that the trust management system of the invention may be provided using some or all of the mentioned features and components without departing from the spirit and scope of the present invention. It will also be apparent to the skilled artisan that the embodiments described above are specific examples of a single broader invention which may have greater scope than any of the singular descriptions taught. There may be many alterations made in the descriptions without departing from the spirit and scope of the present invention.

## Claims

1. A system for enabling consumers to select service providers from a federated network of providers based on trust rating relative to one or more trust metrics comprising:
a trust authority for rating service providers and issuing trust certificates to those providers;
a trust validation service for validating trust certificates used in communication to convey trust; and
an interface accessible to consumers for presenting a list of trusted service providers rated by the trust authority;
**characterized in that** the service provider information provided in the listing includes trust rating, pricing for services, and a trust certificate summary visible to the consumer to help the consumer decide which service provider to contact.
